# EUROPEAN PATENT APPLICATION

(11) **EP 2 709 001 A1**
(43) Date of publication of application: **19.03.2014**
(21) Application number: 12184547.3
(22) Date of filing: 14.09.2012
(51) Int. Cl.: G06F 3/14, G06Q 30/02, G09F 27/00

(54) **A display control device and system**

(71) Applicant: BlackBerry Limited, Waterloo, ON N2K 0A7 (CA)
(72) Inventor: Gärdenfors, Dan, Zacharias, 21140 Malmö (SE); Eriksson, Marcus, 21140 Malmö (SE)
(74) Representative: MERH-IP Matias Erny Reichl Hoffmann

(57) **Abstract**

A device, system and method for controlling displays is provided. The device communicates with a plurality of public display systems, the plurality of public display systems being otherwise independent of each other. The device at least temporarily controls at least a portion of the plurality of public display systems to provide respective content independent of respective control instructions associated with each of the plurality of public display systems.

## Description

### FIELD

The specification relates generally to display systems, and specifically to a display control device and system, and methods therefor.

### BACKGROUND

In environments with many public displays, such as streets, squares, malls and the like, there is general visual information overload as content on each screen competes for attention.

### SUMMARY

An aspect of the specification provides a device comprising: a processor and a communication interface, the processor enabled to: communicate, via the communication interface, with a plurality of public display systems, the plurality of public display systems being otherwise independent of each other; at least temporarily control at least a portion of the plurality of public display systems to provide respective content independent of respective control instructions associated with each of the plurality of public display systems.

Tithe processor can be further enabled to control at least the portion of the plurality of public display systems according to control data provided to the at least a portion of the plurality of public display systems by the processor, an indication of the control data stored at a memory in communication with the processor.

The processor can be further enabled to control at least the portion of the plurality of public display systems to provide at least temporary emphasis to one or more displays in the plurality of public display systems

The processor can be further enabled to control at least the portion of the plurality of public display systems to sequentially display the respective content.

The processor can be further enabled to control at least the portion of the plurality of public display systems to sequentially temporarily increase a respective brightness of one or more displays in the plurality of public display systems, relative to other displays in the plurality of public display systems.

The processor can be further enabled to control at least the portion of the plurality of public display systems to sequentially provide graphical pointers to each display in at least the portion of the plurality of public display systems.

The processor can be further enabled to: request and receive the respective content from at least the portion of the plurality of public display systems; and control at least the portion of the plurality of public display systems to sequentially provide the respective content across at least the portion of the plurality of public display systems, including at least one display of a public display system that is not associated with the respective content.

The processor can be further enabled to: determine proximity of one or more mobile devices to at least one display of the plurality of public display systems; and, control the portion of the plurality of public display systems to provide the respective content by controlling the at least one display to provide the respective content according to data associated with each of the one or more mobile devices.

The processor can be further enabled to: determine proximity of a mobile device to at least one display of the plurality of public display systems; and, control at least the portion of the plurality of public display systems to provide the respective content by controlling the at least one display to provide the respective content according to content being provided at the mobile device.

The processor can be further enabled to: determine proximity of a mobile device to at least one display of the plurality of public display systems; allow content from the mobile device to be displayed at the at least one display; and, control at least the portion of the plurality of public display systems to provide the respective content by controlling the at least one display to provide the respective content according to the content from the mobile device.

The processor can be further enabled to: determine input received in association with an interactive display in the plurality of public display systems; and, control at least the portion of the plurality of public display systems to provide the respective content according to the input.

The processor can be further enabled to: determine proximity of a mobile device to at least one display of the plurality of public display systems; and, allow the respective content provided at the at least one display to be transmitted to the mobile device for display thereon.

Another aspect of the specification provides a method comprising: communicating, at a processor of a device, via a communication interface of the device, with a plurality of public display systems, the plurality of public display systems being otherwise independent of each other; at least temporarily controlling, at the processor, at least a portion of the plurality of public display systems to provide respective content independent of respective control instructions associated with each of the plurality of public display systems.

The method can further comprise controlling at least the portion of the plurality of public display systems according to control data provided to the at least a portion of the plurality of public display systems by the processor, an indication of the control data stored at a memory in communication with the processor.

The method can further comprise controlling at least the portion of the plurality of public display systems to provide at least temporary emphasis to one or more displays in the plurality of public display systems

The method can further comprise controlling at least the portion of the plurality of public display systems to sequentially display the respective content.

The method can further comprise controlling at least the portion of the plurality of public display systems to sequentially temporarily increase a respective brightness of one or more displays in the plurality of public display systems, relative to other displays in the plurality of public display systems.

The method can further comprise controlling at least the portion of the plurality of public display systems to sequentially provide graphical pointers to each display in at least the portion of the plurality of public display systems.

The method can further comprise: requesting and receiving the respective content from at least the portion of the plurality of public display systems; and controlling at least the portion of the plurality of public display systems to sequentially provide the respective content across at least the portion of the plurality of public display systems, including at least one display of a public display system that is not associated with the respective content.

The method can further comprise: determining proximity of one or more mobile devices to at least one display of the plurality of public display systems; and, controlling the portion of the plurality of public display systems to provide the respective content by controlling the at least one display to provide the respective content according to data associated with each of the one or more mobile devices.

The method can further comprise: determining proximity of a mobile device to at least one display of the plurality of public display systems; and, controlling at least the portion of the plurality of public display systems to provide the respective content by controlling the at least one display to provide the respective content according to content being provided at the mobile device.

The method can further comprise: determining proximity of a mobile device to at least one display of the plurality of public display systems; allowing content from the mobile device to be displayed at the at least one display; and, controlling at least the portion of the plurality of public display systems to provide the respective content by controlling the at least one display to provide the respective content according to the content from the mobile device.

The method can further comprise: determining input received in association with an interactive display in the plurality of public display systems; and, controlling at least the portion of the plurality of public display systems to provide the respective content according to the input.

The method can further comprise: determining proximity of a mobile device to at least one display of the plurality of public display systems; and, allowing the respective content provided at the at least one display to be transmitted to the mobile device for display thereon.

Another aspect of the specification provides a computer program product, comprising a computer usable medium having a computer readable program code adapted to be executed to implement a method comprising: communicating, at a processor of a device, via a communication interface of the device, with a plurality of public display systems, the plurality of public display systems being otherwise independent of each other; at least temporarily controlling, at the processor, at least a portion of the plurality of public display systems to provide respective content independent of respective control instructions associated with each of the plurality of public display systems. The computer usable medium can comprise a non-transitory computer useable medium.

### BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a system for controlling otherwise independent public display systems, according to non-limiting implementations.

Fig. 2 depicts a common public space comprising displays associated with the public display systems of Fig. 1, according to non-limiting implementations.

Fig. 3 depicts a flowchart of a method for controlling otherwise independent public display systems, according to non-limiting implementations.

Fig. 4 depicts the system of Fig. 1 showing control data being transmitted from a control device to the public display systems, according to non-limiting implementations.

Fig. 5 depicts the common public space of Fig. 2, with the displays being sequentially controlled to provide respective content, according to non-limiting implementations.

Fig. 6 depicts the common public space of Fig. 2, with the displays being sequentially controlled to provide respective content, according to non-limiting implementations.

Fig. 7 depicts the common public space of Fig. 2, with the displays being sequentially brightened and dimmed, according to non-limiting implementations.

Fig. 8 depicts the common public space of Fig. 2, with the displays being sequentially controlled to provide graphic pointers, according to non-limiting implementations.

Fig. 9 depicts the system of Fig. 1 showing respective content being received at the control device such that respective content can be provided across the displays, according to non-limiting implementations.

Fig. 10 depicts the common public space of Fig. 2, with the displays being controlled to provide respective content across the displays, according to non-limiting implementations.

Fig. 11 depicts the common public space of Fig. 2, with the displays being controlled to provide respective content across the displays, according to non-limiting implementations.

Fig. 12 depicts the common public space of Fig. 2, and an interaction with a given display, according to non-limiting implementations.

Fig. 13 depicts the system of Fig. 1 showing an indication of data associated with an interaction with the given display of Fig. 12 being transmitted to an associated public display system such that associated respective content is displayed at a proximate display, according to non-limiting implementations.

Fig. 14 depicts the common public space of Fig. 12, with associated respective content being provided at a display proximal the given display, according to non-limiting implementations.

Fig. 15 depicts the common public space of Fig. 2, with a mobile device proximal at least one display, according to non-limiting implementations.

Fig. 16 depicts the system of Fig. 1 showing data associated with a mobile device being transmitted to a public display system such that associated respective content can be displayed at display(s) proximal the mobile device, according to non-limiting implementations.

Fig. 17 depicts the common public space of Fig. 15, with associated respective content being provided at displays proximal the mobile device, according to non-limiting implementations.

Fig. 18 depicts the common public space of Fig. 15, with associated respective content being provided at displays proximal the mobile device, according to non-limiting implementations.

Fig. 19 depicts the common public space of Fig. 2, with a mobile device proximal at least one display, and device content provided thereupon, associated respective content being provided at a display proximal the at least one display, according to non- limiting implementations.

Fig. 20 depicts the common public space of Fig. 2, with a mobile device proximal at least one display, and respective content at a proximal display transferred to the mobile device, according to non- limiting implementations.

### DETAILED DESCRIPTION

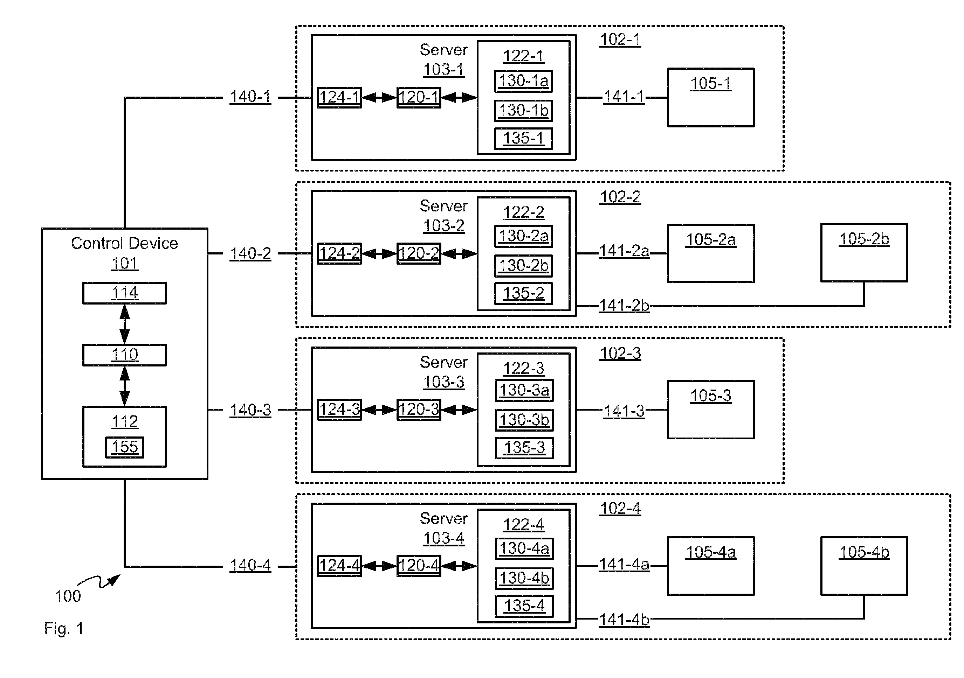

Fig. 1 depicts a system 100 comprising a control device 101, and public display systems 102-1, 102-2, 102-3, 102-4. Control device 101 comprises a processor 110, interconnected with a memory 112 and a communication interface 114 (interchangeably referred to as an interface 114). Each public display system 102-1, 102-2, 102-3, 102-4 comprises a respective server and at least one display. For example: public display system 102-1 comprises a server 103-1, and display 105-1, server 103-1 comprising a processor 120-1, interconnected with a memory 122-1 (storing content 130-1a, 130-1b and instructions 135-1) and a communication interface 124-1; public display system 102-2 comprises a server 103-2, and displays 105-2a, 105-2b, server 103-2 comprising a processor 120-2, interconnected with a memory 122-2 (storing content 130-2a, 130-2b and instructions 135-2) and a communication interface 124-2; public display system 102-3 comprises a server 103-3, and a display 105-3, server 103-3 comprising a processor 120-3, interconnected with a memory 122-3 (storing content 130-3a, 130-3b and instructions 135-3) and a communication interface 124-3; and public display system 102-4 comprises a server 103-4, and a display 105-4, server 103-4 comprising a processor 120-4, interconnected with a memory 122-4 (storing content 130-4a, 130-4b and instructions 135-4) and a communication interface 124-4.

Public display systems 102-1, 102-2, 102-3, 102-4 will interchangeably be referred to hereafter, collectively, as systems 102 and generically as a system 102. Servers 103-1, 103-2, 103-3, 103-4 will interchangeably be referred to hereafter, collectively, as servers 103 and generically as a server 103. Displays 105-1, 105-2a, 105-2b 105-3, 105-4a, 105-4b will interchangeably be referred to hereafter, collectively, as displays 105 and generically as a display 105. Processors 120-1, 120-2, 120-3, 120-4 will interchangeably be referred to hereafter, collectively, as processors 120 and generically as a processor 120. Memories 122-1, 122-2, 122-3, 122-4 will interchangeably be referred to hereafter, collectively, as memories 122 and generically as a memory 122. Communication interfaces 124-1, 124-2, 124-3, 124-4 will interchangeably be referred to hereafter, collectively, as interfaces 124 and generically as an interface 124. Content 130-1a, 130-1b 130-2a, 130-2b 130-3a, 130-3b, 130-4a, 130-4b will interchangeably be referred to hereafter, collectively, as content 130 and generically as content 130. Instructions 135-1, 135-2, 135-3, 135-4 will interchangeably be referred to hereafter, collectively, as instructions 135 and generically as instructions 135.

Control device 101 is in communication with each system 102 via a respective links 140-1, 140-2, 140-3, 140-4 (interchangeably referred to hereafter, collectively, as links 140 and generically as a link 140).

Further, server 103-1 is in communication with display 105-1 via a link 141-1, server 103-2 is in communication with displays 105-2a, 105-2b via respective links 141-2a, 141-2b, server 103-3 is in communication with display 105-3 via a link 141-3, and server 103-4 is in communication with displays 105-4a, 105-4b via respective links 141-4a, 141-4b. Links 141-1, 141-2a, 141-2b, 141-3, 141-4a, 141-4b will be interchangeably referred to hereafter, collectively, as links 141 and generically as a link 141.

In general, each system 102 is independent of other systems 102, in that they do not interact with each. In other words, there are no respective links between systems 102 and/or servers 103. Further, displays 105 are generally located in a common public space, such as a street, a square, a mall, and the like, and are controlled by a respective server 103 to provide respective content 130 stored at each respective memory 122.

For example, each system 102 can be associated with a respective entity that sells advertising space and/or time on each associated display 105. Hence, in these implementations, content 130 can comprise advertisements, or the like, including, but not limited to, text files, animation files, sound files, video files, picture files and the like, indicative of information associated with clients of the entity. Further, instructions 135 can comprise control instructions for providing respective content 130 at each respective display 105. For example, instructions 135-2, when processed by processor 120-2, can cause display 105-2a to provide content 130-2a for a first given time period and content 130-2b for a second given time period (e.g. display 105-2a can alternate between providing content 130-2a, 130-2b); further, instructions 135-2, when processed by processor 120-2, can cause display 105-2b to provide content 130-2a for a third given time period and content 130-2b for a fourth given time period (e.g. display 105-2b can also alternate between providing content 130-2a, 130-2b). Hence, an entity associated with system 102-2 can sell advertising space on each of displays 105-2a, 105-2b. Further, content 130-2a, 130-2b can be provided at displays 105-2a, 105-2b simultaneously or independent of one another.

Similarly: an entity associated with system 102-1 can sell advertising space on display 105-1, as represented by content 130-1a, 130-1b, and instructions 135-1, when processed by processor 120-1, can cause display 105-1 to alternate between providing content 130-1a, 130-1b; an entity associated with system 102-3 can sell advertising space on display 105-3, as represented by content 130-3a, 130-3b, and instructions 135-3, when processed by processor 120-3, can cause display 105-3 to alternate between providing content 130-3a, 130-3b; and an entity associated with system 102-4 can sell advertising space on displays 105-4a, 105-4b, as represented by content 130-4a, 130-4b, and instructions 135-4, when processed by processor 120-4, can cause each of displays 105-4a, 105-4b to alternate between providing content 130-3a, 130-3b.

While systems 102-1, 102-3 each comprise one respective display 105, and systems 102-2, 102-4 each comprise two respective displays 105, it is appreciated that each system 102 can comprise any given number of displays 105, , including, but not limited to tens and hundreds of displays 105, and above. Further, while each system 102 comprises only two items of content 130, it is appreciated that each system 102 can comprise any suitable amount of content 130: for example, a given entity can sell any available advertising space at displays 105 and content 130 can be provided accordingly.

Further, while system 100 comprises only four public display systems 102, in other implementations system 100 can comprise any suitable number of public display systems 102.

It is yet further appreciated that each of control device 101 and servers 103 can comprise a Sun Fire 8800 series server running a UNIX operating system, from Oracle Corporation, Inc. of Santa Clara Calif., and having eight central processing units each operating at about three thousand megahertz and having more than sixteen gigabytes of random access memory. However, it is to be emphasized that this particular server is merely an example, and a vast array of other types of computing environments for each of control device 101 and servers 103 are contemplated. It is further more appreciated that each of control device 101 and servers 103 can comprise any suitable number of servers.

Further, each of control device 101 and servers 103 includes, can be based on any well-known server environment including a module that houses one or more central processing units, volatile memory (e.g. random access memory), persistent memory (e.g. hard disk devices) and network interfaces to allow control device 101 and servers 103 to communicate over respective links 140, 141 and the like.

Each of links 140, 141 comprises any suitable link for respectively enabling device 101 and servers 103 to communicate with each other and with displays 105. Links 140, 141 can hence each include any suitable combination of wired and/or wireless links, wired and/or wireless devices and/or wired and/or wireless networks, including but not limited to any suitable combination of USB (universal serial bus) cables, serial cables, wireless links, cell-phone links, cellular network links (including but not limited to 2G, 2,5G, 3G, 4G+, and the like) wireless data, Bluetooth links, NFC (near field communication) links, WiFi links, WiMax links, packet based links, the Internet, analog networks, the PSTN (public switched telephone network), access points, and the like, and/or a combination.

It is appreciated that Fig. 1 further depicts a schematic diagram of each of device 101 and servers 103 according to non-limiting implementations. It should be emphasized that the structure of device 101 and servers 103 in Fig. 1 is purely an example, and contemplates, respectively, a device 101 for controlling servers 103, and servers 103 for controlling displays 105. However, in other implementations, each of device 101 and servers 103 can comprise devices enabled for other functionality as well, including but not limited to, communicating with other devices and/or servers, downloading and uploading functionality (e.g. of content 130 and/or instruction 135) and the like.

With reference to device 101, processor 110 (which can be implemented as a plurality of processors, including but not limited to one or more central processors (CPUs)) is configured to communicate with memory 112 comprising a respective non-volatile storage unit (e.g. Erasable Electronic Programmable Read Only Memory ("EEPROM"), Flash Memory) and a respective volatile storage unit (e.g. random access memory ("RAM")). Programming instructions that implement the functional teachings of device 101 as described herein are typically maintained, persistently, in memory 112 and used by processor 110 which makes appropriate utilization of respective volatile storage during the execution of such programming instructions. Those skilled in the art recognize that memory 112 is an example of computer readable media that can store programming instructions executable on processor 110. Furthermore, memory 112 is also an example of a memory unit and/or memory module.

In particular, it is appreciated that memory 112 stores an application 155 that, when processed by processor 110, enables processor 110 to: communicate, via communication interface 124, with the plurality of public display systems 102, the plurality of public display systems 102 being otherwise independent of each other; and, at least temporarily control at least a portion of the plurality of public display systems 102 to provide respective content 130 independent of respective control instructions 135 associated with each of the plurality of public display systems 102. It is appreciated that at least temporarily controlling public display systems 102 can include at least temporarily coordinating displays 105 of public display systems 102.

It is yet further appreciated that application 155 is an example of programming instructions stored at memory 112.

Processor 110 also connects to interface 114, which can be implemented as one or more connectors and/or network adaptors and/or radios, configured to communicate with systems 102 and/or servers 103 respective links 140. In general, it will be appreciated that interface 114 is configured to correspond with the network architecture that is used to implement respective links 140, as described above. In other implementations a plurality of links with different protocols can be employed at device 101 and thus interface 114 can comprise a plurality of interfaces to support each type of respective link. In any event, it is appreciated that any suitable combination of interfaces is within the scope of present implementations.

Further, it should be understood that in general a wide variety of configurations for device 101 are contemplated.

With reference to servers 103, each processor 120 (which can be implemented as a plurality of processors, including but not limited to one or more central processors (CPUs)) is configured to communicate with a respective memory 122 comprising a respective non-volatile storage unit (e.g. Erasable Electronic Programmable Read Only Memory ("EEPROM"), Flash Memory) and a respective volatile storage unit (e.g. random access memory ("RAM")). Programming instructions that implement the functional teachings of servers 103 as described herein are typically maintained, persistently, in each respective memory 122 and used by each respective processor 120 which makes appropriate utilization of respective volatile storage during the execution of such programming instructions. Those skilled in the art recognize that each memory 122 is an example of computer readable media that can store programming instructions executable on each respective processor 120. Furthermore, each memory 122 is also an example of a memory unit and/or memory module.

In particular, it is appreciated that each memory 122 stores respective instructions 135 for controlling respective displays 105. It is yet further appreciated that instructions 135 are examples of programming instructions stored at each respective memory 122.

Each processor 120 is generally further enabled to receive control data from device 101, such that device 101 at least temporarily controls a respective system 102 to provide respective content 130 at respective display(s) 105, independent of instructions 135.

Each processor 120 also connects to a respective interface 124, which can be implemented as one or more connectors and/or network adaptors and/or radios, configured to communicate with device 101 and respective displays 105 via respective links 140, 141. In general, it will be appreciated that each interface 124 is configured to correspond with the network architecture that is used to implement respective links 140, 141, as described above. In other implementations a plurality of links with different protocols can be employed at each server 103 and thus a respective interface 124 can comprise a plurality of interfaces to support each type of respective link. In any event, it is appreciated that any suitable combination of interfaces is within the scope of present implementations.

Further, it should be understood that in general a wide variety of configurations for each of servers 103 are contemplated.

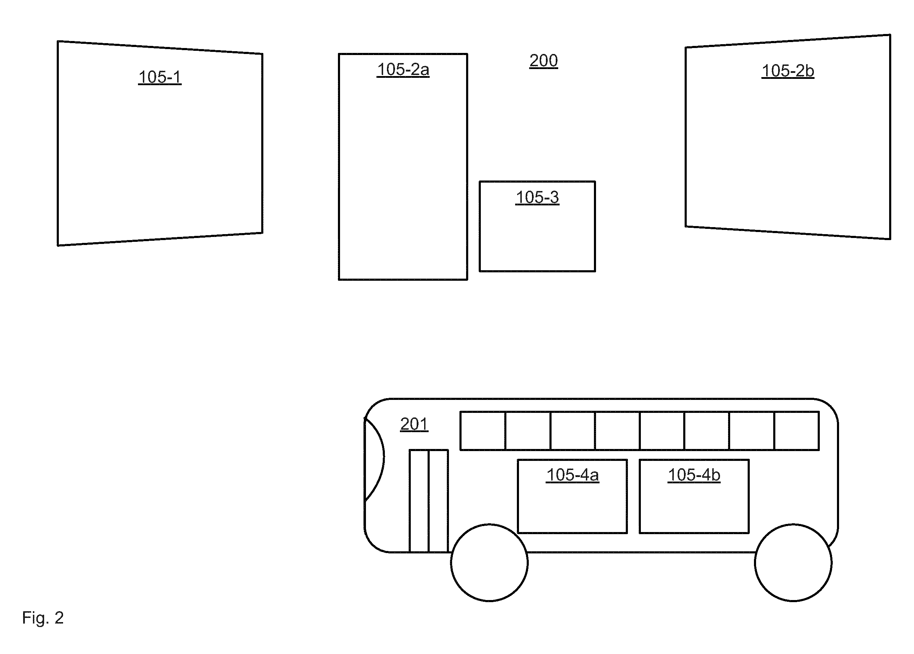

Each of displays 105 can include, but are not limited to, one or more of: CRT (cathode ray tube) and/or flat panel displays (e.g. LCD (liquid crystal display), plasma, OLED (organic light emitting diode) displays and the like) and/or LED (light emitting diode) displays. Displays 105 can further be ruggedized for an outdoor and/or public environment. Furthermore each of displays 105 can be of different sizes, aspect ratios, geometric shapes and the like: for example, while in Fig. 2, each display 105 is rectangular, in other implementations some displays 105 can be square, circular, triangular, and/or curved. It is yet further appreciated that one or more of displays 105 can comprise an interactive display, for example touch screen display and the like. It is yet further appreciated that one or more of displays 105 can be enabled to communicate with mobile devices, for example via a wireless link thereto, such that one or more of displays 105 can receive data from a mobile device and provide the data thereupon, for example, in a temporary slave mode.

It is further appreciated that each display 105 can be located in a common public space, such as a street, a square, a mall and the like. Hence, by way of example, attention is next directed to Fig. 2 which depicts a common public space 200 where displays 105 can be located. It is appreciated that, in these implementations, displays 105-2a, 105-2b are not adjacent one another, though both are elements of system 102-2. Further, displays 105-2a, 105-3 are adjacent, though they are each elements of different systems 102. It is further appreciated that displays 105-4a, 105-4b are mobile, for example located on a side of a bus 201 (hence, in these implementations, links 141-4a, 141-4b comprise wireless links).

In any event, each display 105 can display respective content 130 simultaneously under control of respective servers 103: in essence, each display 105 competes for attention of viewers in common public space 200, similar to displays in Times Square in New York City. In general, due to the visual noise, content 130 at displays 105 becomes unnoticeable.

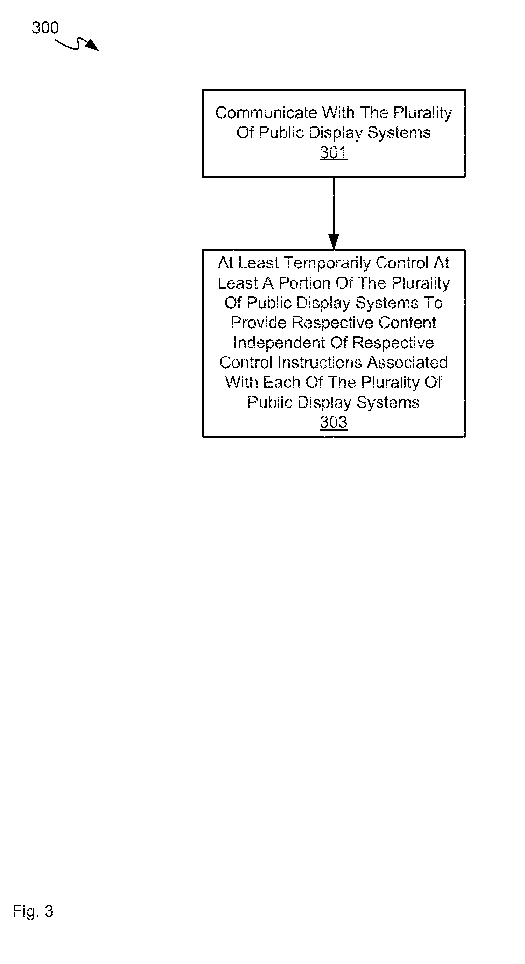

Attention is now directed to Fig. 3 which depicts a flowchart of a method 300 for controlling otherwise independent public display systems, according to non-limiting implementations. In order to assist in the explanation of method 300, it will be assumed that method 300 is performed using system 100. Furthermore, the following discussion of method 300 will lead to a further understanding of system 100 and its various components. However, it is to be understood that system 100 and/or method 300 can be varied, and need not work exactly as discussed herein in conjunction with each other, and that such variations are within the scope of present implementations.

It is appreciated that, in some implementations, method 300 is implemented in system 100 by processor 110 of device 101. Indeed, method 300 is one way in which device 101 can be configured. It is to be emphasized, however, that method 300 need not be performed in the exact sequence as shown, unless otherwise indicated; and likewise various blocks may be performed in parallel rather than in sequence; hence the elements of method 300 are referred to herein as "blocks" rather than "steps". It is also to be understood, however, that method 300 can be implemented on variations of system 100 as well.

At block 301, processor 110 communicates, via interface 114, with the plurality of public display systems 102, the plurality of public display systems 102 being otherwise independent of each other, as described above. For example, it is appreciated that each of public display systems 102 can comprise existing infrastructure (e.g. existing display systems) that are competing for attention in public space 200, as described above. Device 101 can be associated with an entity, associated with public space 200, that seeks to improve public space 200 by coordinating displays of the existing infrastructure. As such, the entity associated with public space 200 can reach agreements with entities associated with systems 102, which will then allow access of device 101 to systems 102 via links 140, in order to control and/or coordinate displays 105.

At block 303, processor 110 at least temporarily controls at least a portion of the plurality of public display systems 102 to provide respective content 130 independent of respective control instructions 135 associated with each of the plurality of public display systems 102.

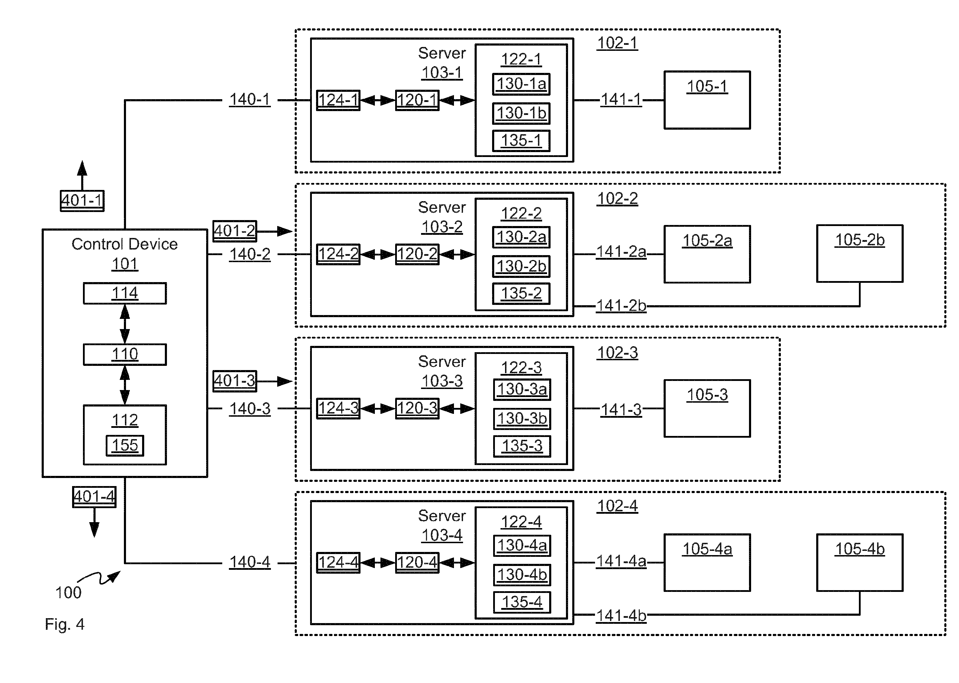

For example, with reference to Fig. 4 (substantially similar to Fig. 1, with like elements having like numbers), processor 110 can be enabled to control at least the portion of the plurality of public display systems 102 according to control data 401-1, 201-2, 201-3, 201-4 (referred to collectively and generically hereafter as control data 401) provided to the at least a portion of the plurality of public display systems 102 by processor 110 via links 140, an indication of control data 401 stored at memory 112 in communication with processor 110: for example, application 155 can comprise an indication of control data 401. In other words, processor 110 can transmit control data 401 to at least a portion of servers 103 to control servers 103 to in turn control respective displays 105 according to control data 401.

In other words, device 101 is not only allowed communication with systems 102, but device 101 is further allowed to control at least a portion of systems 102, for example to coordinate at least a portion of displays 105.

Furthermore, processor 110 and/or application 155 can have access to a map of displays 105: in other words, the physical layout of displays 105 in common public space 200, as depicted in Fig. 2, can be stored in memory 112 as a module of application 155 and/or separately from application 155. Hence, control data 401 can further comprise instructions as to how each display 105 is to behave, taking into account the location of each display 105 in common public space 200.

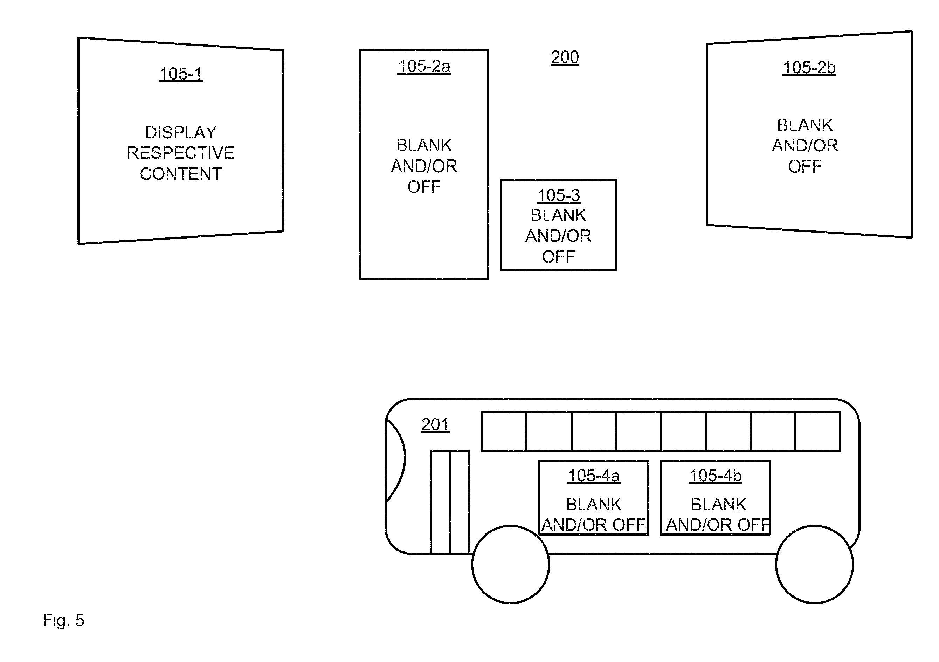

Various implementations of method 300 will now be described hereafter, with reference to Figs. 5 to 19, wherein Figs. 5 to 8, 10 to 12, 14, 15 and 17 to 20 are each substantially similar to Fig. 2, and Figs. 9, 13 and 16 are each substantially similar to Fig. 1, with like elements having like numbers. It is further assumed in the following discussion, displays 105 are controlled (and/or coordinated) via control data 401, as described above.

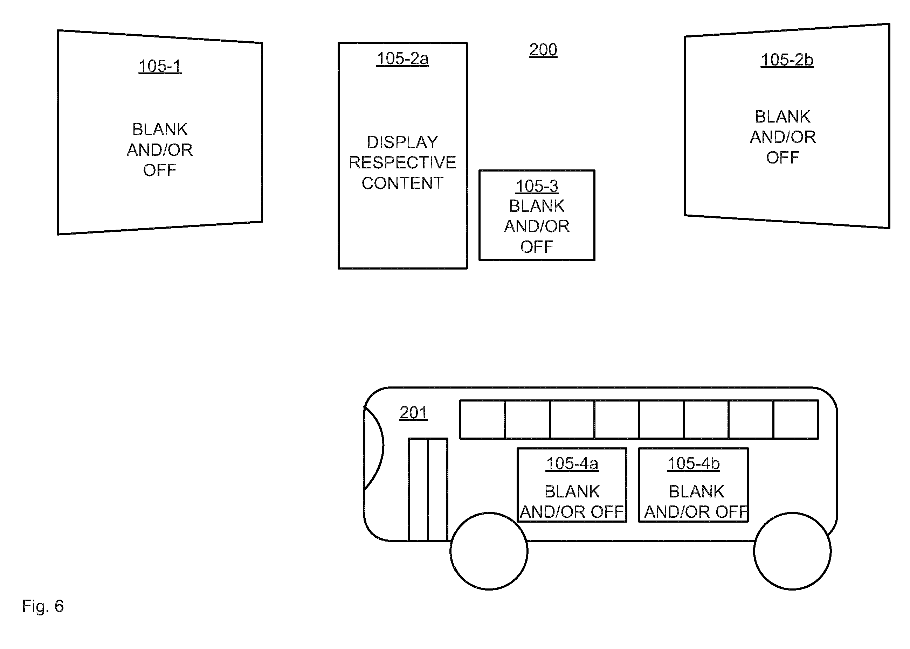

In some implementations, processor 110 is further enabled to control at least the portion of the plurality of public display systems 102 to provide at least temporary emphasis to one or more displays 105 in the plurality of public display systems 102. For example, with reference to Figs. 5 and 6, processor 110 can be enabled to control at least the portion of the plurality of public display systems 102 to sequentially display respective content 130. Specifically, in Fig. 5, display 105-1 is controlled to display respective content 130-1a and/or 130-1b, while other displays 105 are blank and/or off. Display 105-1 is controlled to display respective content 130 for a given time period, for example 10 seconds, 30 seconds or the like, and then a next display 105 is controlled to display respective content, while display 105-1 is controlled to be blank and/or off. For example, as depicted in Fig. 6, display 105-2a is then controlled to display respective content 130-2a and/or 130-2b for the given time period, while other displays 105, including display 105-1, are blank and/or off. Displays 105 are hence sequentially controlled to provide respective content 130 for a given time period, and then blanked and/or turned off to give each display 105 an opportunity to provide respective content 130 without competing for attention with the other displays 105. The cycle then repeats once all displays 105 in the sequence have provided respective content 130.

It is furthermore appreciated that system 100 can enter a temporary cycling mode whereby such cycling between displays 105 occurs for a given period of time, which can depend on one or more of a time of day and/or a day of a week, and the like, and when not in a cycling mode, each system 102 can operate independent of one another.

Furthermore, whether system 100 enters the cycling mode can depend on a number of people in common public space 200: for example, cameras, and the like can collect images of public space 200 which can in turn be analyzed by a suitable computing device to determine an approximate number of people in public space 200: when the approximate number of people is above a threshold number, system 100 can enter the cycling mode.

It is yet further appreciated that the order in which displays 105 provide respective content 130 and are blanked/turned off is generally non-limiting. Further, in some implementations, groups of displays 105 can be controlled to provide respective content 130 concurrently, for example displays 105 associated with the same system 102 (e.g. displays 105-2a, 105-2b), and/or displays 105 which are not in proximity with one another as determined from the map associated with application 155. It is hence appreciated that displays 105 can be turned on and off (and/or blanked), in any order and/or in any grouping of displays 105 as determined via application 155.

Furthermore, which respective content 130 is provided at each display 105 when given their turn in the sequence can be determined via instructions 135 and/or an application (not depicted) at each server 103, which in turn can depend on agreements with providers of the respective content 130.

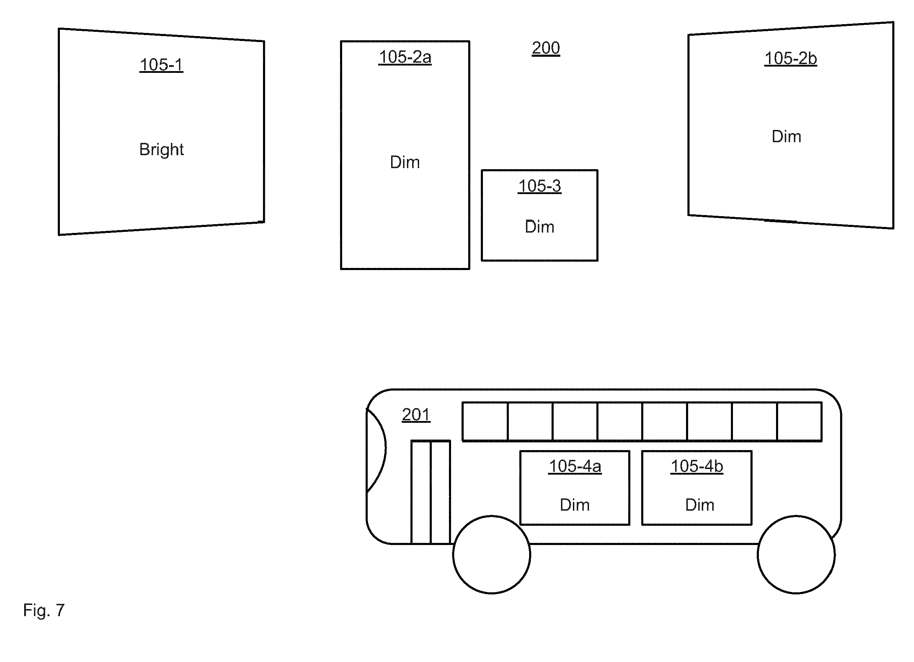

With reference to Fig. 7, in some implementations, processor 110 can be further enabled to control at least the portion of the plurality of public display systems 102 to sequentially temporarily increase a respective brightness of one or more displays 105 in the plurality of public display systems 102, relative to other displays 105 in the plurality of public display systems 102. Specifically, rather than control other displays 105 to be blank and/or off, as in Fig. 5 and 6, a brightness of each display 105 is increased in a sequence and/or other displays 105 are dimmed in order to enable temporary emphasis of the display 105 that is brighter than the other displays. For example, in Fig. 7, display 105-1 is controlled to be brighter than other displays 105, by temporarily increasing brightness of display 105-1 and/or by temporarily dimming brightness of other displays 105.

It is yet further appreciated that while the terms bright and dim are relative, a "bright" display 105 means that a display 105 is set to a brightness level that is greater than a display 105 that is dim, while a "dim" display 105 means that a display 105 is set to a brightness level that is less than a display 105 that is bright.

In these implementations, however, each display 105 can continue to provide respective content 130 regardless of whether a display 105 is brighter or dimmer than any other display 105. However, each system 102 can comprise additional instructions as to which respective content 130 is provided when a respective display 105 is bright and/or dim; for example, a content provider can pay additional fees to an entity associated with device 101 and/or system 102 for providing associated content 130 when a display 105 is bright rather than dim.

It is yet further appreciated that while only one display 105-1 is depicted as bright in Fig. 7, each display 105 in Fig. 7 is controlled in a sequence to be brighter than other displays 105, similar to that described above with reference to Figs. 5 and 6.

In yet further implementations, displays 105 can cycle between a color mode and a monochrome mode to provide temporary emphasis to a display 105 in a color mode.

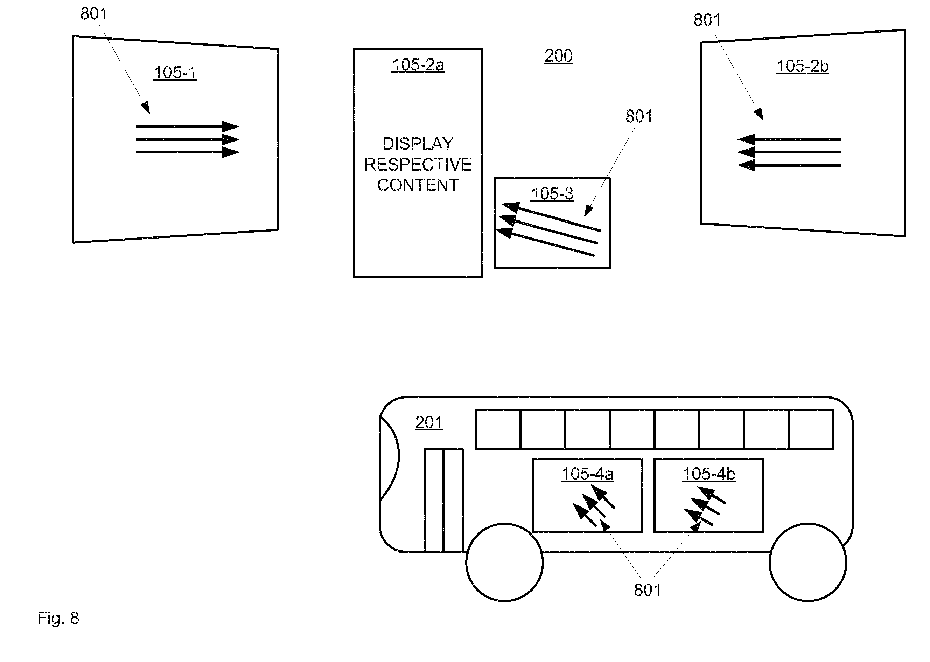

With reference to Fig. 8, in yet further implementations, processor 110 is further enabled to control at least the portion of the plurality of public display systems 102 to sequentially provide graphical pointers 801 to each display 105 in at least the portion of the plurality of public display systems 102. For example, in Fig. 8, display 105-2a is controlled to provide respective content 130-2a and/or 130-2b, and other displays 105 are controlled to provide graphical pointers 801 (e.g. arrows) that point to display 105-2a.

In other words, each display 105 (and/or groups of displays 105) provides respective content 130 in a sequence, while other displays 105 provide graphical pointers 801 to current display 105 (and/or current group of displays 105) that is providing respective content 130. In some implementations, graphical pointers 801 can be dynamic such that when mobile displays 105-4a, 105-4b are moving, graphical pointers 801 are updated (e.g. periodically) to point to display 105-2a.

Such implementations assume that a position of one or more of displays 105-4a, 105-4b and bus 201 are available, for example via location detection devices and/or techniques, including but not limited to GPS (Global Positioning System) unit(s) associated with one or more of displays 105-4a, 105-4b and bus 201, and triangulation techniques, such that a position of displays 105-4a, 105-4b relative to display 105-2a can be determined, for example using the map associated with application 155. In other words, device 101 can one or more of apply a location technique and communicate with a location detection device (not depicted) associated with one or more of displays 105-4a, 105-4b and bus 201 to determine a location of one or more of displays 105-4a, 105-4b and bus 201 to relative to display 105-2a and cause pointers 801 at displays 105-4a, 105-4b to be updated accordingly.

Similarly, when respective content 130 is provided at displays 105-4a, 105-4b, pointers 801 at other displays 105 can be dynamically updated in a similar manner.

In yet further implementations, system 100 can comprise a computer-vision (CV) based location system including cameras (not depicted) enabled to acquire images of public space 200 such the CV-based location system can determine positions of displays 105, including but not limited to mobile displays 105-4a, 105-4b, such that pointers 801 can be updated. In some implementations, device 101 comprises the CV-based location system.

For example, one or more of displays 105 can provide an identifier (including, but not limited to a 2D barcode) at least once and/or periodically to identify themselves to the cameras of the CV-based location system, which can in turn determine a position of each identified display 105.

Furthermore, in some implementations, images of public space 200 can be acquired by cameras of mobile devices located in public space 200, which can be in communication with the CV-based location system. Further, such images from mobile devices can be processed by the CV-based location system to determine one or more of a location of displays 105, a location of the mobile devices, and proximity of the mobile devices to given displays 105.

Regardless, images from cameras (whether located in public space 200 and/or at mobile devices) can be processed by the CV-based location system, and position data (of one or more of mobile displays 105 and mobile devices) can be updated on a recurring basis. In some implementations, pattern recognition techniques can be used at the CV-based location system to recognize provided content 130 at displays 105, which can be used to determine a location thereof. In other words, no specific identification images are employed in these implementations as the CV-based location system is enabled to recognize current content 130 provided by a display 105. In other words, the CV-based location system is in communication with one or more of device 101 and systems 102 such that CV-based location system can determine which content 130 is to be provided at each display 105 at any given time These implementations assume a coordinated time base at all of device 101 and systems 102.

It is yet further appreciated that the CV-based location system can be enabled to determine data associated with displays that are not part of system 100 and/or further enabled to estimate traffic and/or pedestrian activity at public space 200.

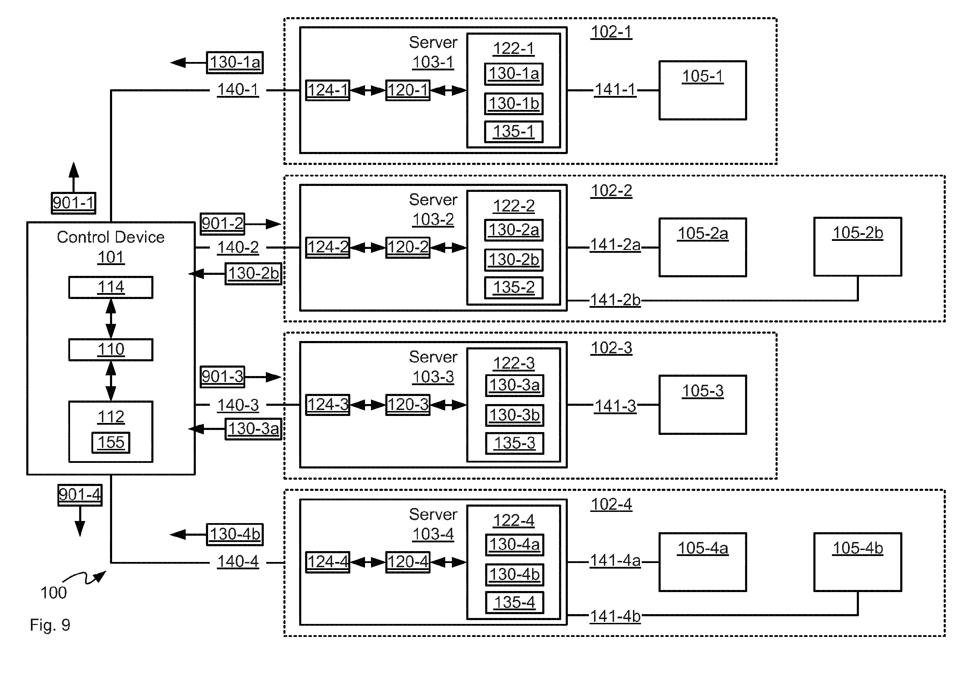

Attention is next directed to Fig. 9, which is substantially similar to Fig. 1, with like elements having like numbers. In these implementations, processor 110: requests and receives respective content 130 from at least the portion of the plurality of public display systems 102, and in the specific non-limiting example, system 102-1; and
controls at least the portion of the plurality of public display systems 102 to sequentially provide the respective content 130 across at least the portion of the plurality of public display systems 102, including at least one display 105 of a public display system 102 that is not associated with the respective content 130.

For example, in depicted implementations, processor transmits respective requests 901-1, 901-2, 901-3, 901-4 (referred hereafter collectively as requests 901 and generically as a request 901) to each system 102 via respective links 140 to request respective content 130 from one or more of systems 102. In specific depicted implementations, each of systems 102 responds by respectively transmitting content 130-1a, 130-2b, 130-3a, 130-4b to device 101 via respective links 140. While each system 102 responds to request 901 by transmitting specific content 130 to device 101, in other implementations, each system 102 can respond by transmitting all respective content 130 to device 101.

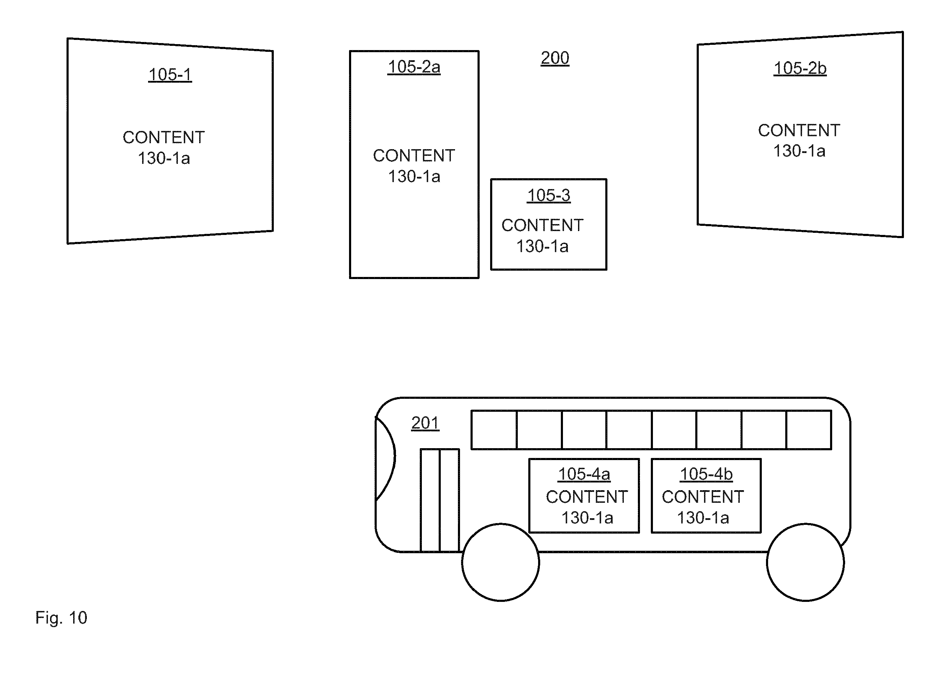

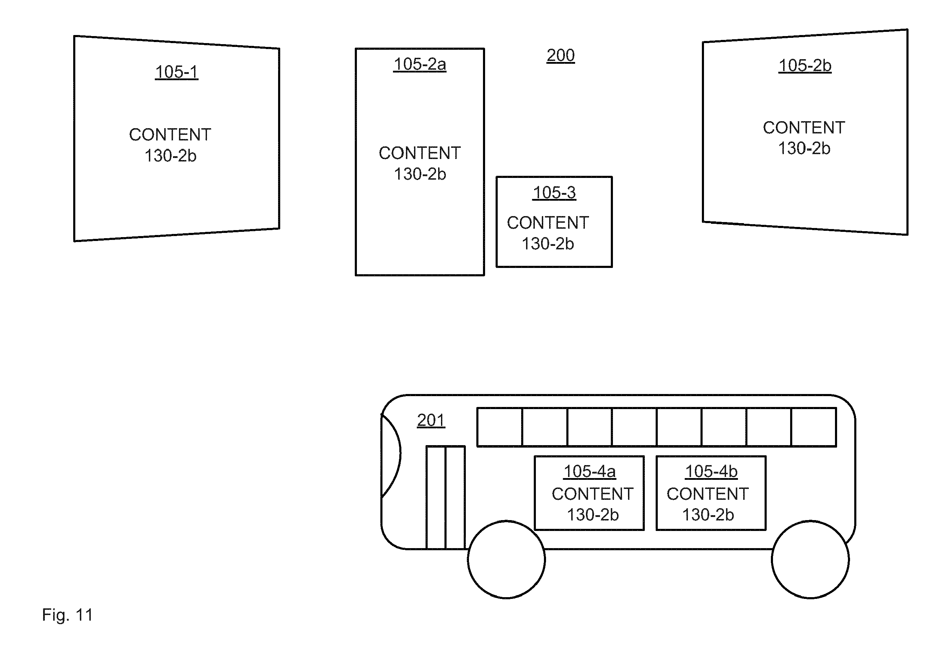

In any event, processor 110 can then control at least a portion of systems 102 to sequentially provide all received respective content 130 across each system 102. For example, attention is next directed to Figs. 10 and 11, each of which are substantially similar to Fig. 2, with like elements having like numbers, in which content 130-1a is first provided across all displays 105 (i.e. as in Fig. 10) for a given time period, and then content 130-2b is provided across all displays 105 (i.e. as in Fig. 11) for a given time period; while not depicted, content 130-3a would then be provided across all displays 105 for a given time period, and then content 130-4b would be provided across all displays 105 for a given time period; processor 110 would then cycle back to controlling all displays 105 to provide content 130-1a, as in Fig. 10.

While not all content 130 is provided in depicted implementations, system 100 could temporarily enter a cycling mode whereby the specific received content 130 could be provided across all displays 105 as described, with system 100 leaving the cycling mode after a given time period. Content providers associated with the received respective content 130 could pay a premium to entities associated with one or more of device 101 and systems 102 to have their associated content 130 be provided across all displays 105 in the cycling mode.

It is further appreciated that content 130 provided in this cycling mode can be designed to be displayed on a plurality of different displays 105 and/or is aspect ratio agnostic. In other words, as each display 105 is can be a different shape, curvature, and the like, content 130 can be designed so that it can be provided across a plurality of display types. For example, content 130 provided in this cycling mode can comprise a graphic file, including but limited to a logo associated with a provider of the content 130, which is provided as wallpaper, and the like, across displays 105.

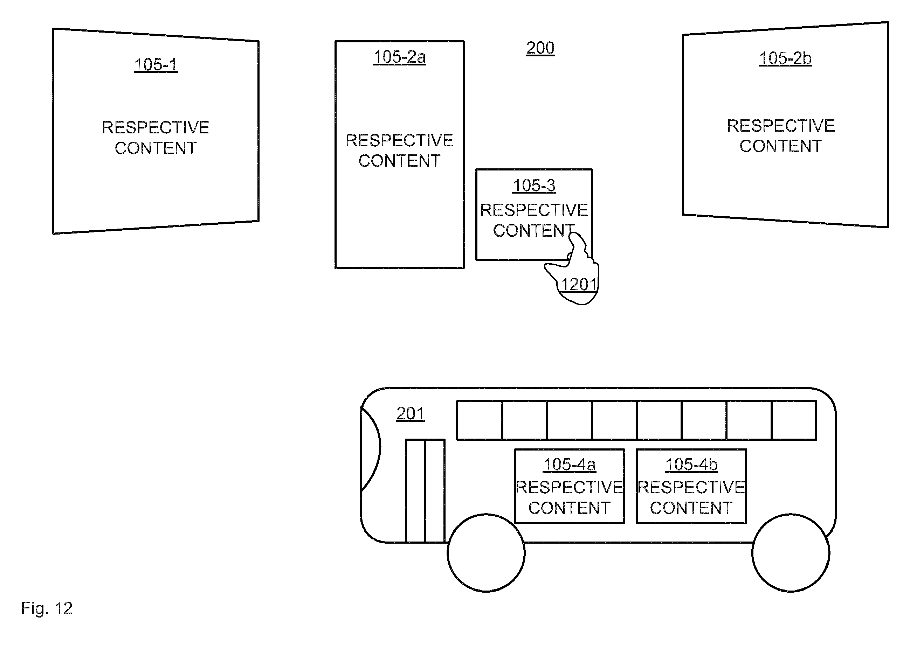

Attention is next directed to Fig. 12 in which an interaction occurs between a hand 1201 of a user and display 105-3. It is appreciated that, in these implementations, display 105-3 comprises an interactive and/or touch screen display. For example, display 105-3 can be providing content 130 that is interactive, including but not limited to a map and/or list showing local attractions and/or businesses. Further information on an item on the map and/or list can be provided by selecting the item via hand 1201.

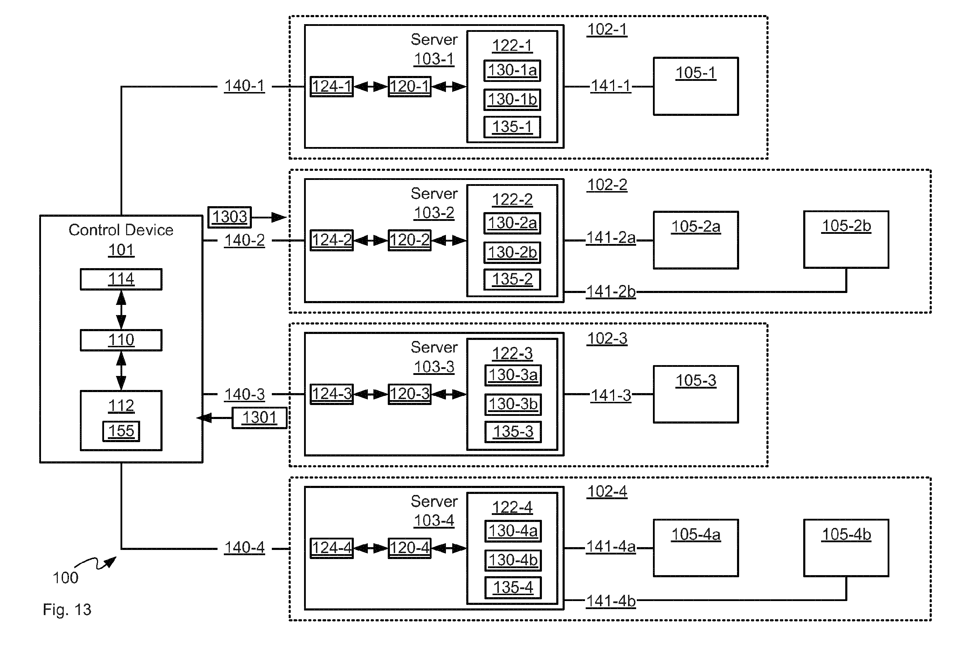

In any event, as depicted in Fig. 13, system 102-3 can transmit data 1301 associated with input received in association with the interaction between hand 1201 and display 105-3 to device 101 via link 140-3. Processor 110 can then: determine input received in association with interactive display 105-3 in the plurality of public display systems 102, for example by processing data 1301; and, control at least the portion of the plurality of public display systems 102 to provide respective content 130 according to the input.

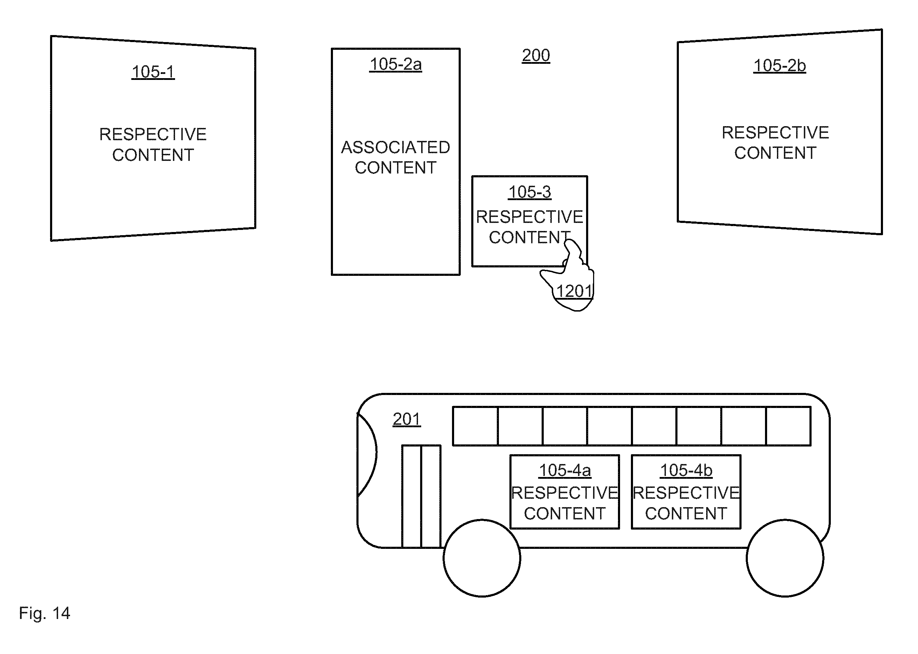

For example, it is appreciated that display 105-2a is adjacent and/or proximal interactive display 105-3. It is further appreciated that each of displays 105-2a, 105-3 are associated with different respective systems 102-2, 102-3. However, display 105-2a can be controlled to provide respective content 130-2a, 130-2b which is associated with input received at display 105-3. When a particular item on the map and/or list is chosen, data 1301 can be indicative of this choice, and device 101 can transmit an indication 1303 of data 1301 to system 103-2 to cause processor 120-2 to determine which respective content 130-2a, 130-2b (and/or other respective content 130) is associated with and/or most closely associated with input received at display 105-3. This associated content 130 can be provided at display 105-2a, as depicted in Fig. 14.

For example, when a given business is chosen from the map and/or list provided at display 105-3, an advertisement for the given business can be provided at proximal display 105-2a even though proximal display 105-2a is not associated with display 105-3 other than via device 101. This assumes, however, that respective content 130 stored in memory 122-2 of system 102-2 includes content for the item chosen from the map and/or list (e.g. an advertisement). When there is no directly associated content, processor 120-2 can determine closest content, and provide that instead.

For example, when a given business is chosen from the map and/or list provided at display 105-3, and there is no content 130 associated with the given business available in content 130-2a, 130-2b, content associated with for a competing given business and/or geographically proximal business can be provided. In particular, entities providing content 130-2a, 130-2b can pay a fee so that their associated content 130 will be provided at display 105-2a when associated and/or closely associated input is received at interactive display 105-3. It is further appreciated that associated respective content 130 can be provide at display 105-2a in conjunction with respective content 130 currently being provided at display 105-2a, the associated respective content 130 provided, for example, as a banner and/or as a picture-in-picture.

It is yet further appreciated that when no interaction is detected at display 105-3, for example within a given time period, system 102-2 can provide respective content 130 at display 105-2a according to instructions 135-2.

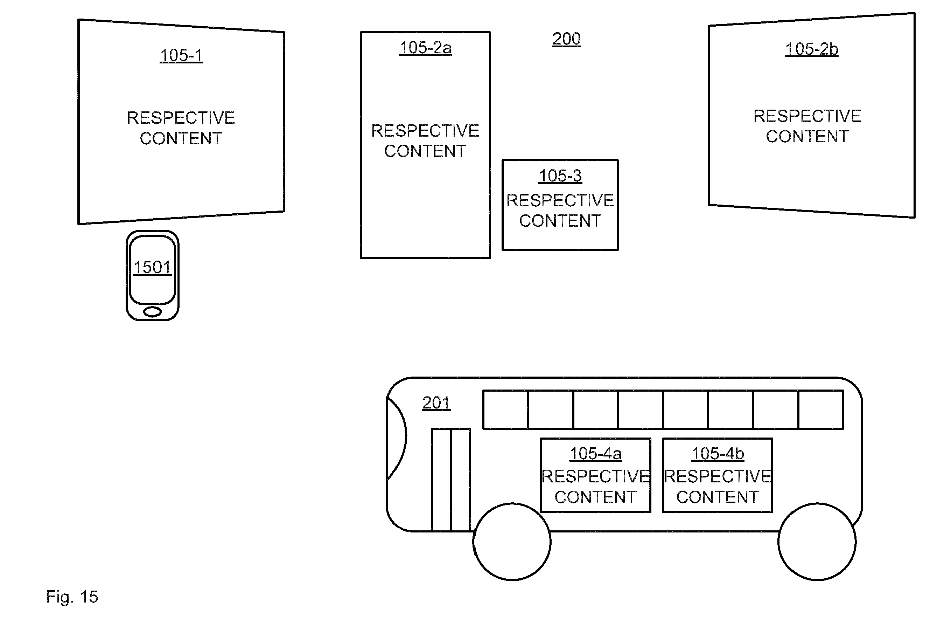

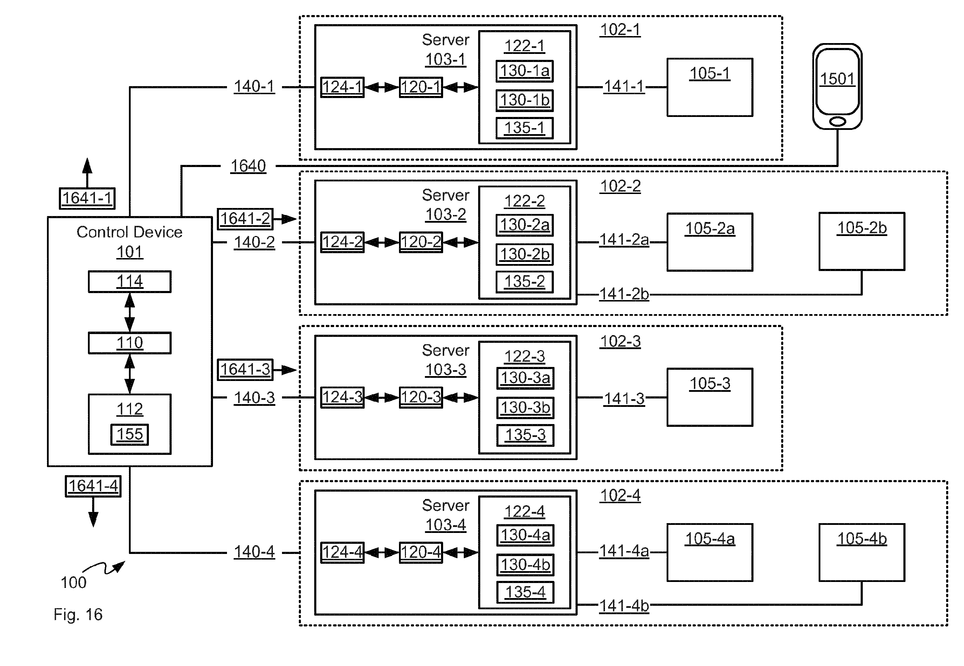

Attention is next directed to Figs. 15 and 16 in which a mobile device 1501 is proximal to displays 105-1, 105-2a and 105-3. In these implementations, processor 110 can be enabled to: determine proximity of one or more mobile devices 1501 to at least one display 105 of the plurality of public display systems 102; and, control at least a portion of the plurality of public display systems 102 to provide respective content 130 by controlling the at least one display 105 to provide the respective content 130 according to data associated with each of the one or more mobile devices 1501.

For example, in some implementations, device 101 can be enabled to establish a wireless link 1640 with mobile device 1501, as depicted in 1640, when device 1501 enters common public space 200 where displays 105 are located, for example, a WiFi connection and the like. In other implementations, a system (not depicted) associated with mobile device 1501 can determine a location of mobile device 1501 and transmit the location of mobile device 1501 to device 101 when mobile device 1501 enters common public space 200 are located. In either case, mobile device 1501 can be associated with permissions to share a location of mobile device 1501 with device 101.

In any event, processor 110 generally determines proximity of mobile device 1501 to one or more of displays 105, and further determines proximity of any other mobile device 1501 to displays 105.

Processor 110 can also be enabled to determine data associated with mobile device 1501. For example, once processor 110 determines proximity of mobile device 1501 to one or more of displays 105, device 101 can request data associated with mobile device 1501, from mobile device 1501 via link 1640 and/or from a storage device associated with mobile device 1501. In the latter case, mobile device 1501 can be associated with permissions to share data associated therewith.

Data associated with mobile device 1501 can include, but is not limited to, data indicative of interests associated with a user of mobile device 1501, browser data associated with mobile device 1501 and the like, such that processor 110 can determine, what a user associated with mobile device 1501 is interested in, for example, soccer or any other topic.

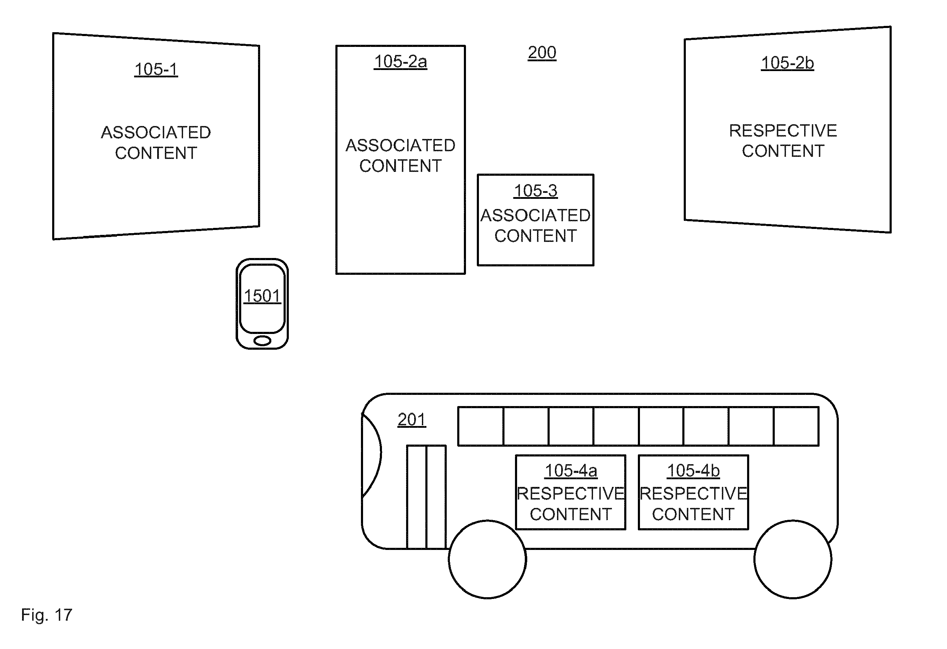

In any event, once processor 110 receives data associated with mobile device 1501, as depicted in Fig. 17, one or more of displays 105 can be controlled to provide content 130 associated with the data, which is in turn associated with mobile device 1501. In other words, processor 110 can determine interests of a user of mobile device 1501 and transmit (as depicted in Fig. 16) data 1641-1, 1641-2, 1641-3, 1641-4 indicative of such (similar to indication 1303) to one or more of systems 102, which can in turn provide associated respective content 130 at one or more of respective displays 105. Data 1641-1, 1641-2, 1641-3, 1641-4 will also be interchangeably referred to hereafter as data 1641. For example, when data 1641 is indicative of an interest in soccer, one or more of systems 102 determine respective content 130 associated with soccer (and/or sports, and the like) and provide the associated respective content 130 at respective displays 105.

In some implementations, as depicted, only displays 105-1, 105-2a, 105-3 in proximity to mobile device 105 are controlled to provide associated content 130.

It is yet further appreciated that only a portion of each proximal display 105 can provide the associated content, for example as a banner and/or as a picture-in-picture, while the remainder of each proximal display 105 can provide respective content 130 as described above.

Further the associated content 130 can be provided for one or more of a given time period, while mobile device 1501 is located in common public space 200, while mobile device 1501 is in proximity to one or more of displays 105 providing the associated content and the like.

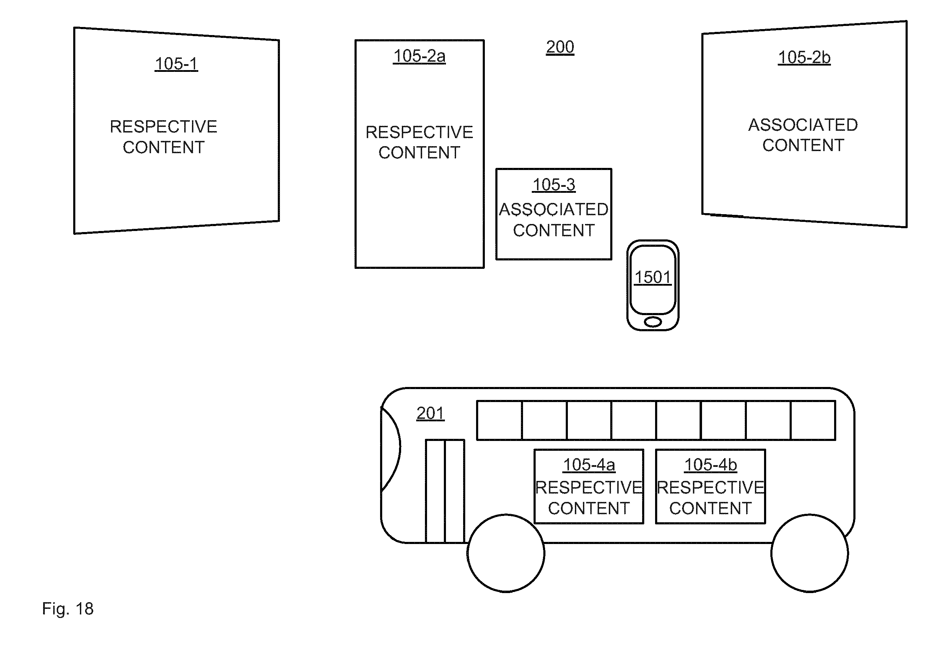

Further, as depicted in Fig. 18, when mobile device 1501 changes location in common public space 200, for example changes a location from proximal display 105-1 to proximal display 105-2b, displays 105 can be updated to provide respective content 130, rather than associated content 130. In other words, as mobile device 1501 moves away from a given display 105-1, displays 105 can be updated to provide associated content 130, rather than respective content 130, as mobile device 1501 moves towards a given display 105-2b.

Put yet another way, as mobile device 1501 moves through common public space 200, displays 105 can change from a normal mode to an associated content mode as mobile device 1501 comes in proximity thereto (e.g. within a given distance) and change back to a normal mode as mobile device 1501 leaves the proximity (e.g. outside the given distance). Techniques for transitioning between the normal mode and the associated content mode can be applied such that abrupt and/or sudden changes of content 130 do not occur. When display 105 are being controlled in conjunction with more than one mobile device 1501 moving through public space 200, associated respective content 130 can follow each mobile device 1501 when possible, with transitions between provided associated respective content 130 being controlled such that abrupt and/or sudden changes of content 130 do not occur.

Further, when more than one mobile device 1501 is in proximity to one or more of displays 105, processor 110 can process data associated with each mobile device and determine common interests and data 1641 can be based on these common interests. Further, when there are no common interests, associated respective content 130 can cycle between interests associated with each mobile device 1501. Alternatively, crowd sourcing techniques can be applied to data associated with the mobile devices to determine a majority common interest and the associated respective content 130 can be reflective of the majority common interest.

Further, in some implementations, when processor 110 determines proximity of mobile device 1501 to at least one display 105 of the plurality of public display systems 102, as described above, processor 110 can control at least the portion of the plurality of public display systems 102 to provide the respective content 130 by controlling the at least one display 105 to provide the respective content 130 according to content being provided at mobile device 1501, referred to hereafter as device content.

With reference to Fig. 16, device 101 can request device content being provided at mobile device 1501, from mobile device 1501 via link 1640 and/or from a storage device and/or network device associated with mobile device 1501, and data 1641 can be indicative of such data. The associated content provided at displays 105 can hence be based on the device content being provided at mobile device 1501. For example, mobile device 1501 can be providing browser data associated with a given business and/or interest, and displays 105 can be controlled to provide associated respective content 130 associated therewith, as described above.

Further, in some implementations, when processor 110 determines proximity of mobile device 1501 to at least one display 105 of the plurality of public display systems 102, as described above, processor 110 can: allow content from mobile device 1501 to be displayed at the at least one display 105; and, control at least the portion of the plurality of public display systems 102 to provide the respective content by controlling the at least one display 105 to provide the respective content 130 according to the content from the mobile device 1501.

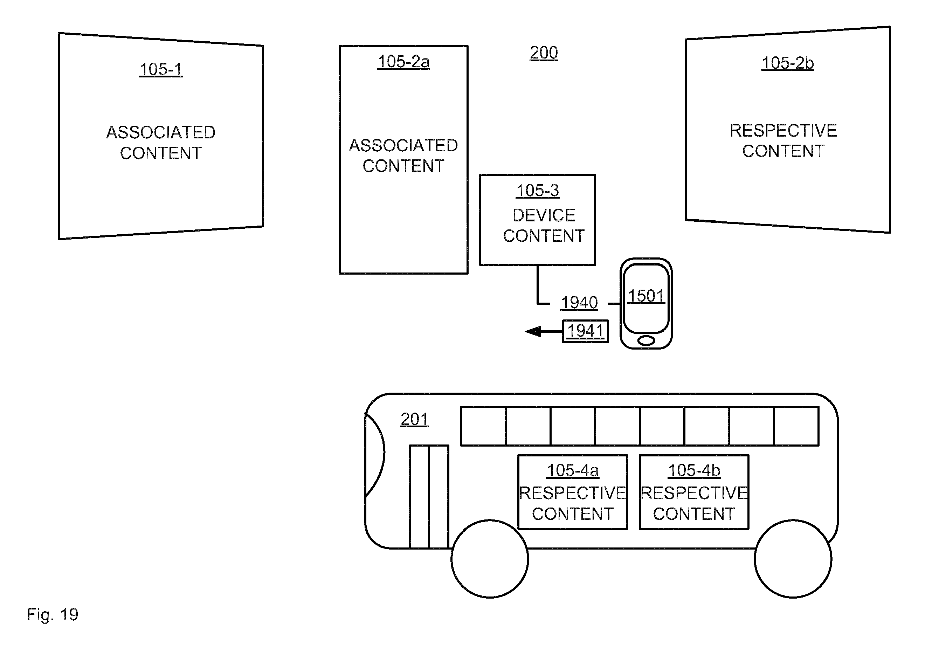

For example, attention is directed to Fig. 19, in which mobile device 1501 is adjacent display 105-3, and in communication therewith via a link 1940, which can be wireless or wired as desired, similar to one or more of links 140, 141, 1640. It is further appreciated that link 1940 can comprise link 1640, such that communication between mobile device 1501 and display 105-3 occurs via device 101. However, link 1940 can include a link with system 102-3, such that communication between mobile device 1501 and display 105-3 occurs via system 102-3. In yet further implementations, link 1940 can comprise a local link with display 105-3, assuming display 105-3 comprises a corresponding communication interface.

In any event, mobile device 1501 can establish communications display 105-3 via one or more of device 101, system 102-3 and display 105-3, and request permission to "borrow" display 105-3 to provide device content thereon. In other words, device content, as described above, being provided at mobile device 1501, is also provided at display 105-3, wherein mobile device 1501 transmits data 1941 indicative of display content to display 105-3 for display thereupon, as depicted in Fig. 19. Hence, for example, browser data displayed at mobile device 1501 can also be provided in a suitable format at display 105-3, device 105-3 entering a slave mode. Further, as already described above, processor 110 can determine the device content and control a proximal display 105, such as display 105-2a, to provide associated respective content 130 according to the content from the mobile device 1501, which can be received via one or more of links 1640, 1940.

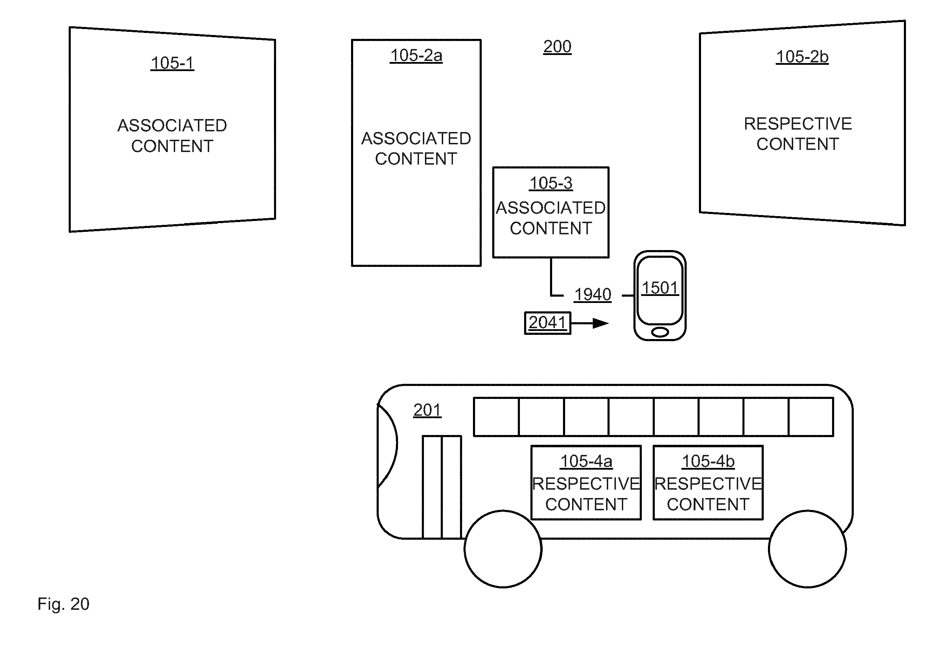

Alternatively, with reference to Fig. 20, content 130 provided at display 105-3 can be communicated to mobile device 1501 via data 2041 transmitted via link 1940. For example, device 101 can be enabled to allow respective content 130 provided at a display 105 to be transmitted to mobile device 1501 for display thereon. Transmission of data 2041 comprising respective content 130, for example provided at display 105-3 proximal mobile device 1501, can occur one or more of automatically and upon receipt of input at mobile device 1501. In the former implementations, mobile device 1501 can be enabled to enter a sharing mode, for example when in public space 200, such that device 101 causes content 130 provided at proximal displays 105 to be pushed thereto; hence, mobile device 1501 can be used by system 100 as an additional display for providing content 130 in public space. In the latter implementations, mobile device 1501 can request download of respective content 130 (e.g. upon receipt of input data requesting respective content 130) via link 1940, which causes transmission of data 2041; in these implementations, for example, a rendering of an coupon or the like, can be provided as content 130 at a display 105, and the content 130 can be requested by mobile device 1501 such that mobile device 1501 receives an electronic copy of the coupon. Regardless, data 2041 can originate at one or more of a respective display 105 (such as display 105-3), a respective system 102 (such as system 102-2) and device 101.

In any event, by providing a device 101 which communicates, with a plurality of public display systems, the plurality of otherwise independent public display systems, the public display systems can be at least temporarily controlled to coordinate content thereupon, to one or more of provide temporary emphasis to one or more displays and provide banner type content associated with a mobile device in proximity to one or more of the displays.

Those skilled in the art will appreciate that in some implementations, the functionality of device 101 and systems 102 can be implemented using pre-programmed hardware or firmware elements (e.g., application specific integrated circuits (ASICs), electrically erasable programmable read-only memories (EEPROMs), etc.), or other related components. In other implementations, the functionality of device 101 and systems 102 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever

Persons skilled in the art will appreciate that there are yet more alternative implementations and modifications possible, and that the above examples are only illustrations of one or more implementations. The scope, therefore, is only to be limited by the claims appended hereto.

## Claims

1. A device (101) comprising:
a processor (110) and a communication interface (114), the processor (110) enabled to:
communicate, via the communication interface (114), with a plurality of public display systems (102), the plurality of public display systems (102) being otherwise independent of each other;
at least temporarily control at least a portion of the plurality of public display systems (102) to provide respective content independent of respective control instructions associated with each of the plurality of public display systems (102).

2. The device (101) of claim 1, wherein the processor (110) is further enabled to control at least the portion of the plurality of public display systems (102) according to control data provided to the at least a portion of the plurality of public display systems (102) by the processor (110), an indication of the control data stored at a memory in communication with the processor (110).

3. The device (101) of claim 1 or 2, wherein the processor (110) is further enabled to control at least the portion of the plurality of public display systems (102) to provide at least temporary emphasis to one or more displays (105) in the plurality of public display systems (102) by one or more of:
sequentially displaying the respective content;
sequentially temporarily increasing a respective brightness of one or more displays (105) in the plurality of public display systems (102), relative to other displays (105) in the plurality of public display systems (102); and
sequentially providing graphical pointers to each display (105) in at least the portion of the plurality of public display systems (102).

4. The device (101) of any previous claim, wherein the processor (110) is further enabled to:
request and receive the respective content from at least the portion of the plurality of public display systems (102); and
control at least the portion of the plurality of public display systems (102) to sequentially provide the respective content across at least the portion of the plurality of public display systems (102), including at least one display (105) of a public display system (102) that is not associated with the respective content.

5. The device (101) of any previous claim, wherein the processor (110) is further enabled to:
determine proximity of one or more mobile devices (1501) to at least one display (105) of the plurality of public display systems (102); and, one or more of:
control the portion of the plurality of public display systems (102) to provide the respective content by controlling the at least one display (105) to provide the respective content according to data associated with each of the one or more mobile devices (1501);
control at least the portion of the plurality of public display systems (102) to provide the respective content by controlling the at least one display (105) to provide the respective content according to content being provided at the mobile device (1501);
allow content from the mobile device (1501) to be displayed at the at least one display (105); and, control at least the portion of the plurality of public display systems (102) to provide the respective content by controlling the at least one display (105) to provide the respective content according to the content from the mobile device (1501); and,
allow the respective content provided at the at least one display (105) to be transmitted to the mobile device (1501) for display thereon.

6. The device (101) of any previous claim, wherein the processor (110) is further enabled to:
determine input received in association with an interactive display (105) in the plurality of public display systems (102); and,
control at least the portion of the plurality of public display systems (102) to provide the respective content according to the input.

7. The device (101) of any previous claim, wherein the processor (110) is further enabled to:
determine proximity of a mobile device (1501) to at least one display (105) of the plurality of public display systems (102); and, one or more of:
controlling the portion of the plurality of public display systems (102) to provide the respective content by controlling the at least one display (105) to provide the respective content according to data associated with each of the one or more mobile devices (1501);
controlling at least the portion of the plurality of public display systems (102) to provide the respective content by controlling the at least one display (105) to provide the respective content according to content being provided at the mobile device (1501);
allowing content from the mobile device (1501) to be displayed at the at least one display (105); and, control at least the portion of the plurality of public display systems (102) to provide the respective content by controlling the at least one display (105) to provide the respective content according to the content from the mobile device (1501); and,
allowing the respective content provided at the at least one display (105) to be transmitted to the mobile device (1501) for display thereon.

8. A method comprising:
communicating, at a processor (110) of a device (101), via a communication interface (114) of the device (101), with a plurality of public display systems (102), the plurality of public display systems (102) being otherwise independent of each other;
at least temporarily controlling, at the processor (110), at least a portion of the plurality of public display systems (102) to provide respective content independent of respective control instructions associated with each of the plurality of public display systems (102).

9. The method of claim 8, further comprising controlling at least the portion of the plurality of public display systems (102) to provide at least temporary emphasis to one or more displays (105) in the plurality of public display systems (102) by one or more of:
sequentially displaying the respective content;
sequentially temporarily increasing a respective brightness of one or more displays (105) in the plurality of public display systems (102), relative to other displays (105) in the plurality of public display systems (102); and
sequentially providing graphical pointers to each display (105) in at least the portion of the plurality of public display systems (102).

10. The method of claim 8 or 9, further comprising controlling at least the portion of the plurality of public display systems (102) to sequentially display the respective content.

11. The method of any of claims 8 to 10, further comprising controlling at least the portion of the plurality of public display systems (102) to sequentially temporarily increase a respective brightness of one or more displays (105) in the plurality of public display systems (102), relative to other displays (105) in the plurality of public display systems (102).

12. The method of any of claims 8 to 11, further comprising controlling at least the portion of the plurality of public display systems (102) to sequentially provide graphical pointers to each display (105) in at least the portion of the plurality of public display systems (102).

13. The method of any of claims 8 to 12, further comprising:
requesting and receiving the respective content from at least the portion of the plurality of public display systems (102); and
controlling at least the portion of the plurality of public display systems (102) to sequentially provide the respective content across at least the portion of the plurality of public display systems (102), including at least one display (105) of a public display system (102) that is not associated with the respective content.

14. The method of any of claims 8 to 13, further comprising:
determining proximity of one or more mobile devices (1501) to at least one display (105) of the plurality of public display systems (102); and, one or more of:
controlling the portion of the plurality of public display systems (102) to provide the respective content by controlling the at least one display (105) to provide the respective content according to data associated with each of the one or more mobile devices (1501);
controlling at least the portion of the plurality of public display systems (102) to provide the respective content by controlling the at least one display (105) to provide the respective content according to content being provided at the mobile device (1501);
allowing content from the mobile device (1501) to be displayed at the at least one display (105); and, control at least the portion of the plurality of public display systems (102) to provide the respective content by controlling the at least one display (105) to provide the respective content according to the content from the mobile device (1501); and,
allowing the respective content provided at the at least one display (105) to be transmitted to the mobile device (1501) for display thereon.

15. The method of any of claims 8 to 14, further comprising:
determining input received in association with an interactive display (105) in the plurality of public display systems (102); and,
controlling at least the portion of the plurality of public display systems (102) to provide the respective content according to the input.

## Amended claims

### Amended claims in accordance with Rule 137(2) EPC.

**1.** A device (101) comprising:
a processor (110) interconnected with a memory (112) and a communication interface (114), the memory (112) storing an application (155) that when processed by the processor (110) causes the processor (110) to:
communicate, via the communication interface (114), with a plurality of display systems (102), the plurality of display systems (102) being otherwise independent of each other in that there are no respective communication links between any one of the plurality of display systems (102) and another one of the plurality of display systems (102); and
at least temporarily control at least a portion of the plurality of display systems (102) to provide respective content independent of respective control instructions for providing content to each of the plurality of display systems (102), the content stored at respective memories (122) associated with the plurality of display systems (102).

**2.** The device (101) of claim 1, wherein when the application (155) is processed by the processor (110), the processor (110) is further caused to control at least the portion of the plurality of display systems (102) according to control data provided to the at least a portion of the plurality of display systems (102) by the processor (110), an indication of the control data stored at the memory (112).

**3.** The device (101) of claim 1 or 2, wherein when the application (155) is processed by the processor (110), the processor (110) is further caused to control at least the portion of the plurality of display systems (102) to provide at least temporary emphasis to one or more displays (105) in the plurality of display systems (102) by one or more of:
sequentially displaying the respective content;
sequentially temporarily increasing a respective brightness of one or more displays (105) in the plurality of display systems (102), relative to other displays (105) in the plurality of display systems (102); and
sequentially providing graphical pointers to each display (105) in at least the portion of the plurality of display systems (102).

**4.** The device (101) of any previous claim, wherein when the application (155) is processed by the processor (110), the processor (110) is further caused to:
request and receive the respective content from at least the portion of the plurality of display systems (102); and
control at least the portion of the plurality of display systems (102) to sequentially provide the respective content across at least the portion of the plurality of display systems (102), including at least one display (105) of a display system (102) that is not associated with the respective content.

**5.** The device (101) of any previous claim, wherein when the application (155) is processed by the processor (110), the processor (110) is further caused to:
determine proximity of one or more mobile devices (1501) to at least one display (105) of the plurality of display systems (102); and, one or more of:
control the portion of the plurality of display systems (102) to provide the respective content by controlling the at least one display (105) to provide the respective content according to data associated with each of the one or more mobile devices (1501);
control at least the portion of the plurality of display systems (102) to provide the respective content by controlling the at least one display (105) to provide the respective content according to content being provided at the mobile device (1501);
allow content from the mobile device (1501) to be displayed at the at least one display (105); and, control at least the portion of the plurality of display systems (102) to provide the respective content by controlling the at least one display (105) to provide the respective content according to the content from the mobile device (1501); and,
allow the respective content provided at the at least one display (105) to be transmitted to the mobile device (1501) for display thereon.

**6.** The device (101) of any previous claim, wherein when the application (155) is processed by the processor (110), the processor (110) is further caused to:
determine input received in association with an interactive display (105) in the plurality of display systems (102); and,
control at least the portion of the plurality of display systems (102) to provide the respective content according to the input.

**7.** The device (101) of any previous claim, wherein when the application (155) is processed by the processor (110), the processor (110) is further caused to:
determine proximity of a mobile device (1501) to at least one display (105) of the plurality of display systems (102); and, one or more of:
controlling the portion of the plurality of display systems (102) to provide the respective content by controlling the at least one display (105) to provide the respective content according to data associated with each of the one or more mobile devices (1501);
controlling at least the portion of the plurality of display systems (102) to provide the respective content by controlling the at least one display (105) to provide the respective content according to content being provided at the mobile device (1501);
allowing content from the mobile device (1501) to be displayed at the at least one display (105); and, control at least the portion of the plurality of display systems (102) to provide the respective content by controlling the at least one display (105) to provide the respective content according to the content from the mobile device (1501); and,
allowing the respective content provided at the at least one display (105) to be transmitted to the mobile device (1501) for display thereon.

**8.** A method comprising:
communicating, by a processor (110) of a device (101), via a communication interface (114) of the device (101), with a plurality of display systems (102), the plurality of display systems (102) being otherwise independent of each other in that there are no respective communication links between any one of the plurality of display systems (102) and another one of the plurality of display systems (102); and
at least temporarily controlling, by the processor (110), at least a portion of the plurality of display systems (102) to provide respective content independent of respective control instructions for providing content to each of the plurality of display systems (102), the content stored at respective memories (122) associated with the plurality of display systems (102).

**9.** The method of claim 8, further comprising controlling at least the portion of the plurality of display systems (102) to provide at least temporary emphasis to one or more displays (105) in the plurality of display systems (102) by one or more of:
sequentially displaying the respective content;
sequentially temporarily increasing a respective brightness of one or more displays (105) in the plurality of display systems (102), relative to other displays (105) in the plurality of display systems (102); and
sequentially providing graphical pointers to each display (105) in at least the portion of the plurality of display systems (102).

**10.** The method of claim 8 or 9, further comprising controlling at least the portion of the plurality of display systems (102) to sequentially display the respective content.

**11.** The method of any of claims 8 to 10, further comprising controlling at least the portion of the plurality of display systems (102) to sequentially temporarily increase a respective brightness of one or more displays (105) in the plurality of display systems (102), relative to other displays (105) in the plurality of display systems (102).

**12.** The method of any of claims 8 to 11, further comprising controlling at least the portion of the plurality of display systems (102) to sequentially provide graphical pointers to each display (105) in at least the portion of the plurality of display systems (102).

**13.** The method of any of claims 8 to 12, further comprising:
requesting and receiving the respective content from at least the portion of the plurality of display systems (102); and
controlling at least the portion of the plurality of display systems (102) to sequentially provide the respective content across at least the portion of the plurality of display systems (102), including at least one display (105) of a display system (102) that is not associated with the respective content.

**14.** The method of any of claims 8 to 13, further comprising:
determining proximity of one or more mobile devices (1501) to at least one display (105) of the plurality of display systems (102); and, one or more of:
controlling the portion of the plurality of display systems (102) to provide the respective content by controlling the at least one display (105) to provide the respective content according to data associated with each of the one or more mobile devices (1501);
controlling at least the portion of the plurality of display systems (102) to provide the respective content by controlling the at least one display (105) to provide the respective content according to content being provided at the mobile device (1501);
allowing content from the mobile device (1501) to be displayed at the at least one display (105); and, control at least the portion of the plurality of display systems (102) to provide the respective content by controlling the at least one display (105) to provide the respective content according to the content from the mobile device (1501); and,
allowing the respective content provided at the at least one display (105) to be transmitted to the mobile device (1501) for display thereon.

**15.** The method of any of claims 8 to 14, further comprising:
determining input received in association with an interactive display (105) in the plurality of display systems (102); and,
controlling at least the portion of the plurality of display systems (102) to provide the respective content according to the input.

## Amended claims

### Amended claims in accordance with Rule 137(2) EPC.

**1.** A system (100) comprising:
a plurality of display systems (102); and
a device (101) having
a processor (110) interconnected with a memory (112) and a communication interface (114), the memory (112) storing an application (155) that when processed by the processor (110) causes the processor (110) to:
communicate, via the communication interface (114), with the plurality of display systems (102), the plurality of display systems (102) being otherwise independent of each other in that there are no respective communication links between any one of the plurality of display systems (102) and another one of the plurality of display systems (102); and
at least temporarily control at least a portion of the plurality of display systems (102) to provide respective content independent of respective control instructions for providing content to each of the plurality of display systems (102), the content stored at respective memories (122) associated with the plurality of display systems (102).

**2.** The system (100) of claim 1, wherein when the application (155) is processed by the processor (110), the processor (110) is further caused to control at least the portion of the plurality of display systems (102) according to control data provided to the at least a portion of the plurality of display systems (102) by the processor (110), an indication of the control data stored at the memory (112).

**3.** The system (100) of claim 1 or 2, wherein when the application (155) is processed by the processor (110), the processor (110) is further caused to control at least the portion of the plurality of display systems (102) to provide at least temporary emphasis to one or more displays (105) in the plurality of display systems (102) by one or more of:
sequentially displaying the respective content;
sequentially temporarily increasing a respective brightness of one or more displays (105) in the plurality of display systems (102), relative to other displays (105) in the plurality of display systems (102); and
sequentially providing graphical pointers to each display (105) in at least the portion of the plurality of display systems (102).

**4.** The system (100) of any previous claim, wherein when the application (155) is processed by the processor (110), the processor (110) is further caused to:
request and receive the respective content from at least the portion of the plurality of display systems (102); and
control at least the portion of the plurality of display systems (102) to sequentially provide the respective content across at least the portion of the plurality of display systems (102), including at least one display (105) of a display system (102) that is not associated with the respective content.

**5.** The system (100) of any previous claim, wherein when the application (155) is processed by the processor (110), the processor (110) is further caused to:
determine proximity of one or more mobile devices (1501) to at least one display (105) of the plurality of display systems (102); and, one or more of:
control the portion of the plurality of display systems (102) to provide the respective content by controlling the at least one display (105) to provide the respective content according to data associated with each of the one or more mobile devices (1501);
control at least the portion of the plurality of display systems (102) to provide the respective content by controlling the at least one display (105) to provide the respective content according to content being provided at the mobile device (1501);
allow content from the mobile device (1501) to be displayed at the at least one display (105); and, control at least the portion of the plurality of display systems (102) to provide the respective content by controlling the at least one display (105) to provide the respective content according to the content from the mobile device (1501); and,
allow the respective content provided at the at least one display (105) to be transmitted to the mobile device (1501) for display thereon.

**6.** The system (100) of any previous claim, wherein when the application (155) is processed by the processor (110), the processor (110) is further caused to:
determine input received in association with an interactive display (105) in the plurality of display systems (102); and,
control at least the portion of the plurality of display systems (102) to provide the respective content according to the input.

**7.** The system (100) of any previous claim, wherein when the application (155) is processed by the processor (110), the processor (110) is further caused to:
determine proximity of a mobile device (1501) to at least one display (105) of the plurality of display systems (102); and, one or more of:
controlling the portion of the plurality of display systems (102) to provide the respective content by controlling the at least one display (105) to provide the respective content according to data associated with each of the one or more mobile devices (1501);
controlling at least the portion of the plurality of display systems (102) to provide the respective content by controlling the at least one display (105) to provide the respective content according to content being provided at the mobile device (1501);
allowing content from the mobile device (1501) to be displayed at the at least one display (105); and, control at least the portion of the plurality of display systems (102) to provide the respective content by controlling the at least one display (105) to provide the respective content according to the content from the mobile device (1501); and,
allowing the respective content provided at the at least one display (105) to be transmitted to the mobile device (1501) for display thereon.

**8.** A method comprising:
communicating, by a processor (110) of a device (101), via a communication interface (114) of the device (101), with a plurality of display systems (102), the plurality of display systems (102) being otherwise independent of each other in that there are no respective communication links between any one of the plurality of display systems (102) and another one of the plurality of display systems (102); and
at least temporarily controlling, by the processor (110), at least a portion of the plurality of display systems (102) to provide respective content independent of respective control instructions for providing content to each of the plurality of display systems (102), the content stored at respective memories (122) associated with the plurality of display systems (102).

**9.** The method of claim 8, further comprising controlling at least the portion of the plurality of display systems (102) to provide at least temporary emphasis to one or more displays (105) in the plurality of display systems (102) by one or more of:
sequentially displaying the respective content;
sequentially temporarily increasing a respective brightness of one or more displays (105) in the plurality of display systems (102), relative to other displays (105) in the plurality of display systems (102); and
sequentially providing graphical pointers to each display (105) in at least the portion of the plurality of display systems (102).

**10.** The method of claim 8 or 9, further comprising controlling at least the portion of the plurality of display systems (102) to sequentially display the respective content.

**11.** The method of any of claims 8 to 10, further comprising controlling at least the portion of the plurality of display systems (102) to sequentially temporarily increase a respective brightness of one or more displays (105) in the plurality of display systems (102), relative to other displays (105) in the plurality of display systems (102).

**12.** The method of any of claims 8 to 11, further comprising controlling at least the portion of the plurality of display systems (102) to sequentially provide graphical pointers to each display (105) in at least the portion of the plurality of display systems (102).

**13.** The method of any of claims 8 to 12, further comprising:
requesting and receiving the respective content from at least the portion of the plurality of display systems (102); and
controlling at least the portion of the plurality of display systems (102) to sequentially provide the respective content across at least the portion of the plurality of display systems (102), including at least one display (105) of a display system (102) that is not associated with the respective content.

**14.** The method of any of claims 8 to 13, further comprising:
determining proximity of one or more mobile devices (1501) to at least one display (105) of the plurality of display systems (102); and, one or more of:
controlling the portion of the plurality of display systems (102) to provide the respective content by controlling the at least one display (105) to provide the respective content according to data associated with each of the one or more mobile devices (1501);
controlling at least the portion of the plurality of display systems (102) to provide the respective content by controlling the at least one display (105) to provide the respective content according to content being provided at the mobile device (1501);
allowing content from the mobile device (1501) to be displayed at the at least one display (105); and, control at least the portion of the plurality of display systems (102) to provide the respective content by controlling the at least one display (105) to provide the respective content according to the content from the mobile device (1501); and,
allowing the respective content provided at the at least one display (105) to be transmitted to the mobile device (1501) for display thereon.

**15.** The method of any of claims 8 to 14, further comprising:
determining input received in association with an interactive display (105) in the plurality of display systems (102); and,
controlling at least the portion of the plurality of display systems (102) to provide the respective content according to the input.
